# EUROPÄISCHE PATENTANMELDUNG

(11) **EP 1 453 067 A1**
(43) Veröffentlichungstag der Anmeldung: **01.09.2004**
(21) Anmeldenummer: 03450049.6
(22) Anmeldetag: 25.02.2003
(51) Int. Cl.: H01B 7/08, H01B 13/14

(54) **Flexibier extrudierter flachleiter**

(71) Anmelder: I & T Flachleiter Produktions-Ges.m.b.H., 7011 Siegendorf (AT)
(72) Erfinder: Schubert, Artur, 2803 Schwarzenbach (AT)
(74) Vertreter: Patentanwälte BARGER, PISO & PARTNER

(57) **Zusammenfassung**

Die Erfindung betrifft ein extrudiertes Flachkabel, einen sogenannten FFC (1) mit zumindest einer Leiterbahn (2), die von einem Extrudat (5) aus elektrisch iesolierendem Material umgeben ist.

Die Erfindung ist dadurch gekennzeichnet, dass zumindest ein Lichtleiter (3), der im wesentlichen Parallel zur Leiterbahn (2) im Extrudat (5) verläuft, vorgesehen ist. Bevorzugt besteht der Lichtleiter aus einem Glasfaserbündel.

Die Erfindung betrifft auch Verfahren zur Herstellung eines derartigen FFC und eine Art der Faltung.

## Beschreibung

Die Erfindung betrifft flexible Flachleiter, sogenannte FFC, die durch Extrudieren hergestellt sind. Diese Leitertypen setzen sich in letzter Zeit, insbesondere im Automobilbau, gegenüber den klassischen Rundleitern bzw. Rundkabeln, mehr und mehr durch, da sie im Gegensatz zu Rundkabeln durch Automaten manipuliert werden können und die Automatisation einer großen Anzahl von Schritten bei der Herstellung, Konfektionierung und dem Einbau erlauben.

Bei den FFC unterscheidet man im wesentlichen zwei Typen, die laminierten FFC und die extrudierten FFC. Bei den laminierten FFC befinden sich die einzelnen Leiterbahnen zwischen zwei Laminatschichten, die für die korrekte Positionierung, den mechanischen Zusammenhalt und die elektrische Isolierung zwischen den einzelnen Leiterbahnen und der einzelnen Leiterbahnen gegenüber der Umgebung verantwortlich sind. Es haben sich aber in letzter Zeit eher die extrudierten FFC durchgesetzt, bei denen Leiterbahnen, zumeist aus Kupfer oder Kuperlegierungen mit rundem, ovalem oder quadratischem bis rechteckigem Querschnitt in speziellen Extrudieranlagen mit einem elektrisch isolierenden Extrudat umhüllt werden, das die gleichen Aufgaben übernimmt, wie die beiden Laminatschichten bei dem laminierten FFC. Der Vorteil ist die höhere mechanische Festigkeit und die kostengünstige Herstellung sowie die Möglichkeit, die Leiterbahnen selbst mit größerem Querschnitt, insbesondere größerer Höhenerstreckung, auszubilden.

Die Verwendung derartiger FFC, insbesondere in Kraftfahrzeugen erfolgt immer öfter, wobei es möglich ist, dass einzelne der Leiterbahnen Signale und andere Leistung übertragen.

In einer auf anderen Grundlagen und Überlegungen beruhenden Entwicklung versucht man in jüngster Zeit vermehrt, die Übertragung von Daten im Kraftfahrzeug gegen die mannigfachen Störungen zu schützen, insbesondere durch Abschirmungen u.dgl.

Die Erfindung hat das Ziel, die möglichst einfache und flexible Übertragung sowohl von Daten als auch von Leistung zu verbessern und schlägt dazu vor, dass bei einem extrudierten FFC zumindest ein Lichtleiter mitextrudiert wird. Auf diese Weise ist es möglich, den Lichtleiter zur Übertragung von Signalen und Daten bei allen elektrischen Verbrauchern des Kraftfahrzeuges an genau vordefinierter Stelle des FFC zur Verfügung zu haben, um die entsprechenden Umsetzer und elektrische Steuergeräte mit den notwendigen Daten zu versehen bzw. von ihnen die gelieferten Daten abzunehmen. Darüberhinaus ist es auch möglich, Licht an genau definierten Stellen zu schaffen, ohne dort eine Lampe oder andere Primärlichtquelle vorsehen zu müssen.

In einer Ausgestaltung der Erfindung ist vorgesehen, den Lichtleiter als Glasfaserbündel auszubilden, wobei entweder die Einzelfasern so angeordnet sind, dass das Bündel im wesentlichen die Form eines flachen Rechteckes aufweist oder einzelne (runde oder nahezu runde) Teilbündel werden so angeordnet, dass das Gesamtbündel im wesentlichen die Form eines flachen Rechteckes aufweist. Der Querschnitt des Bündels/Gesamtbündels kann dabei ähnlich dem Querschnitt der einzelnen Leiterbahnen sein. In der Folge wird der Einfachheit halber nur von einem "Bündel" gesprochen.

In einer Weiterbildung der Erfindung ist vorgesehen, die Einzelfasern direkt, d.h. ohne Hülle, in den FFC zu extrudieren. Wenn eine Hülle vorgesehen ist, so kann diese aus verschiedenen Harzen oder Polymeren bestehen. Ob die Hülle im selben Arbeitsgang aufgebracht wird, in dem das Bündel gebildet wird oder in einem eigenen Arbeitsgang, spielt keine Rolle.

Die Erfindung ist im folgenden an Hand der Zeichnung näher erläutert. Dabei zeigt
die Fig. 1 einen schematischen Querschnitt durch einen erfindungsgemäßen FFC,
die Fig. 2 die Ausbildung einer Faltung eines erfindungsgemäßen FFC,
die Fig. 3a und 3b die Abfolge und Form der Führungen für das Faserbündel und
die Fig. 4 eine Seitenansicht der Zufuhr des Fahrerbündels rein schematisch.

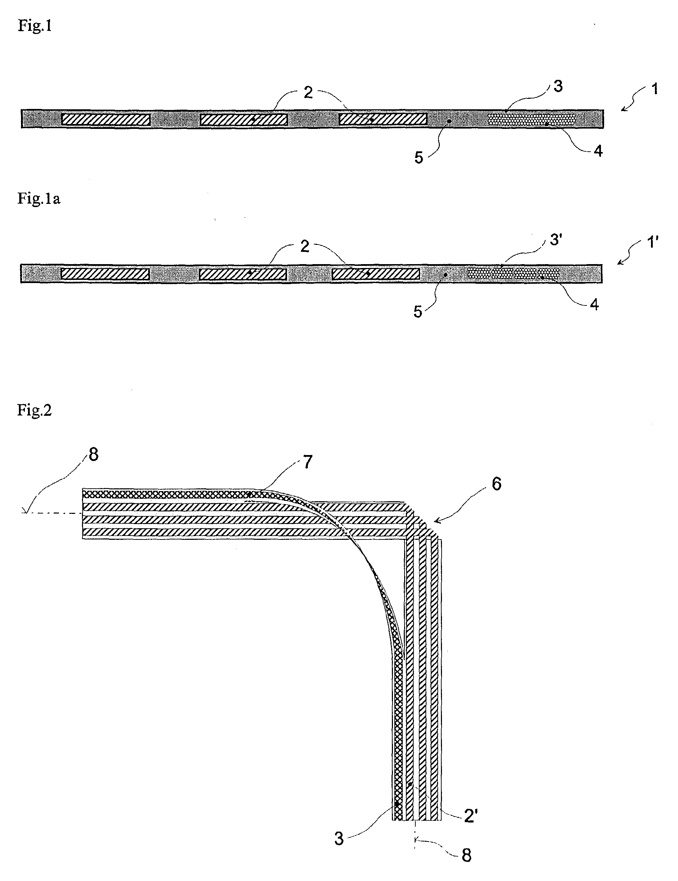

In Fig. 1 ist ein Querschnitt eines erfindungsgemäß ausgebildeten FFC rein schematisch dargestellt: Ein solcher FFC 1 besteht zumindest aus einer Leiterbahn 2, im dargestellten Ausführungsbeispiel sind drei derartige Leiterbahnen vorgesehen, und zumindest einem Lichtleiter 3. Im dargestellten Ausführungsbeispiel besteht der Lichtleiter 3 aus einer Vielzahl untereinander gleicher Glasfasern 4, die Anordnung der Glasfasern 4 im FFC 1 ist so getroffen, dass der Gesamtquerschnitt des Lichtleiters 3 sich der Form der Leiterbahnen 2 anpaßt, d.h. dass vom Extrudat 5 eine ausreichend dicke Deckschicht zu beiden Seiten des Lichtleiters 3 verbleibt, um den mechanischen Zusammenhalt des FFC 1 sicherzustellen. Es ist selbstverständlich möglich, dem FFC eine andere Form zu geben, mehr oder weniger Leiterbahnen oder Leiterbahnen mit anderer Form vorzusehen und einen zweiten oder dritten Lichtleiter gleicher oder anderer Form in den FFC mit zu extrudieren.

Üblicherweise werden FFC, die ja innerhalb ihrer durch den flachen Aufbau gebildeten Ebene eine merkliche Steifigkeit besitzen, dadurch umgelenkt, dass sie gefaltet werden. Diese Faltungen erfolgen zumeist durch Ausbildung einer Schlaufe, die anschließend flach gedrückt wird. Lichterleiter, wie sie bevorzugt für erfindungsgemäße FFC verwendet werden und bei denen beispielsweise die Einzelfasern nur mehr einen Durchmesser von rund 50 Mikrometer aufweisen, sind bereits bis zu einem Radius von 5 Millimeter zu biegen, ohne dabei zu brechen. Derartige Radien sind aber immer noch viel zu groß im Vergleich zu den Radien, die übliche FFC im Bereich ihrer Faltung aufweisen, so dass die herkömmlichen Faltungen für die erfindungsgemäßen FFC nicht in Frage kommen.

Die Fig. 2 zeigt nun eine Faltung, wie sie erfindungsgemäß bei den FFC's mit Lichtleitern durchgeführt werden kann: Ein erfindungsgemäßer FFCI weist eine Faltung 6 auf, die durchaus üblich ausgebildet ist. Das Besondere an dieser Faltung ist, dass der am Rand des FFC 1 angeordnete Lichtleiterbereich 7 vom anderen Bereich des Lichtleiters 3 im Gebiet der Faltung 6 durch einen Schlitz parallel zur Achse 8 des FFC 1 zwischen dem Lichtleiter 3 und der ihm benachbarten Leiterbahn 2' durchtrennt ist, so dass bei der Ausbildung der Faltung 6 der Bereich 7 des FFC's, der den Lichtleiter 3 enthält, nicht gefaltet wird. Dieser Bereich 7 hebt sich über die Darstellungsebene der Fig. 2 hoch und verläuft in einem Bogen mit einem wesentlich größeren Radius (somit wesentlich kleinerer Krümmung) als der FFC im Bereich der Faltung 6.

Es ist im dargestellten Ausführungsbeispiel der Bereich 7 als Randbereich ausgebildet, dies ist wegen der besseren Zugänglichkeit des restlichen Bereiches des FFC 1 am Ort der Faltung 6 für die diversen Werkzeuge vorteilhaft, aber nicht notwendig. Es ist durchaus möglich, den Bereich 7 in der Mitte des FFC bzw. im Inneren des FFC vorzusehen, es bildet sich dann jede Faltung so aus, wie bei zwei einzelnen, parallel zueinander geführten FFC.

Die Herstellung eines erfindungsgemäßen FFC bringt auch in Kenntnis der Grundidee der Erfindung insoferne Probleme mit sich, als die einzelnen Glasfasern in aufgerollter Form als Bündel mit insgesamt rundem Querschnitt vorliegen und, um ein Brechen bzw. aus der vorgesehenen Form herauslaufen, zu vermeiden, auf sehr behutsame Weise, man bedenke den oben erwähnten häufigsten Durchmesser der Einzelfasern im Bereich 50 Mikrometer, in die Querschnittsform gebracht werden müssen, in der sie im FFC vorliegen sollen.

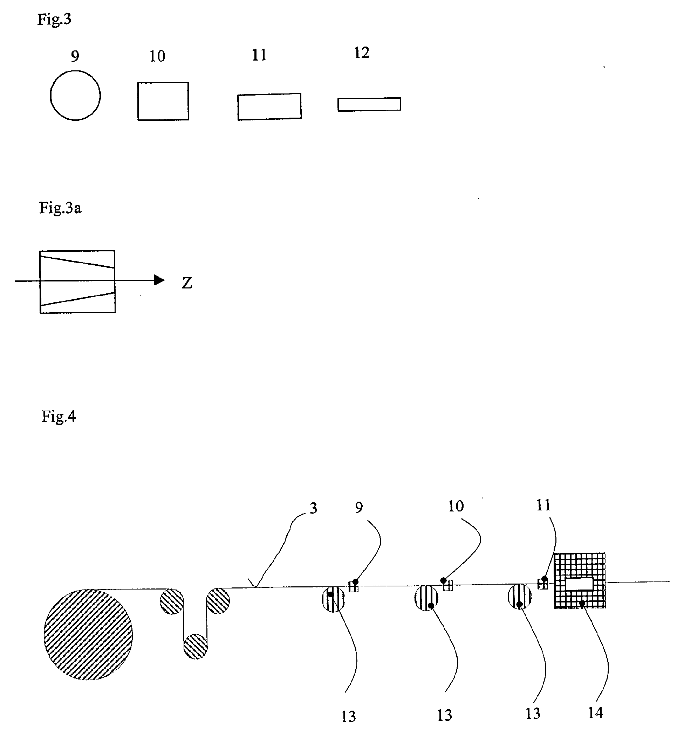

Die Fig. 3a zeigt die beispielsweise Ausbildung der Querschnitte der Führungen, durch die die Fasern des Glasfaserbündels sukzessive geführt werden. Wie aus Fig. 4 ersichtlich ist, sind diese Führungen, dort sind nur zwei vor der endgültigen, schon zum Spritzkopf gehörigen, Präzisionsführung eingezeichnet, unmittelbar nach Führungsrollen angeordnet. Im Detail sieht dies folgendermaßen aus:

Im dargestellten Ausführungsbeispiel sind vier Führungen 9 bis 12 in Bewegungsrichtung der Glasfasern hintereinander angeordnet und weisen jeweils, wie aus der Darstellung der Fig. 3b hervorgeht, zueinander unterschiedlichen und in Ziehrichtung veränderlichen Querschnitt auf, wobei einer Verengung in der einen Richtung eine Verbreiterung in der Richtung normal hinzu, entspricht. Die Ziehrichtung ist mit dem Pfeil Z angedeutet.

Das Glasfaserbündel durchlauft somit der Reihe nach eine runde Führung 9, die zur Vergleichmäßigung und Ordnung des von einer Rolle abgezogenen Bündels führt. In einigem Abstand von dieser Führung und relativ knapp nach einer gegebenenfalls profilierten Führungsrolle 13 (Fig. 4) folgt die nächste Führung, deren Eingangsöffnung noch eher der Querschnittsform des ankommenden Glasfaserbündels 3 angepaßt ist. In Ziehrichtung Z ändert sich nun diese Querschnittsform, wodurch die einzelnen Glasfasern innerhalb des Bündels ihren Platz und das gesamte Bündel seinen Querschnitt ändert.

Anschließend an das Durchlaufen einer jeder der Führungen 9 bis 12 folgt eine Strecke, in der sich das Glasfaserbündel 3 frei bewegt, so dass es zu einer Vergleichmäßigung und Stabilisierung der Bündelform kommt, bis schließlich, nach dem Überlaufen einer weiteren Führungsrolle 13, die nächste der Führungen erreicht wird, wo der nächste Schritt der Umlagerung der Glasfasern erfolgt, und so weiter.

Es ist selbstverständlich nicht notwendig, dass vier Führungen vorgesehen sind, es können auch mehr oder weniger sein, auch die Form der Führungen kann anders als dargestellt, gewählt sein. Es ist auch denkbar, dass entsprechend konfektionierte Glasfaserbündel bereits an anderer Stelle vorbereitet werden bzw. in der gewünschten Form hergestellt und zwischengelagert werden, sodass die geschilderte Art der Umformenden Zufuhr nicht notwendig ist.

Die Fig. 4 zeigt ein Beispiel für den Ablauf eines derartigen Glasfaserbündels. Wenn nicht ein, sondern mehrere Glasfaserbündel in einem FFC 1 vorgesehen sind, sind entsprechend mehrere derartiger Zufuhren parallel zueinander vor dem Spritzkopf anzuordnen.

Der in seiner Gesamtheit mit 14 bezeichnete eigentliche Spritzkopf, in dem das Extrudat aufgebracht wird, weist auch eine entsprechende Präzisionsführung für die Gesamtheit der zu umspritzenden Leiterbahnen 2 und Glasfaserbündel 3 auf. In diesem Bereich der Herstellung des erfindungsgemäßen FFC ist keine besondere Adaption des Glasfaserbündels mehr notwendig, das aufgearbeitete und vorbereitete Glasfaserbündel 3 kann wie eine Leiterbahn 2 umspritzt werden.

Die Materialien für den Lichtleiter sind die üblichen, in Kenntnis der Erfindung und in Absprache mit einem Fachmann auf dem Gebiete der Glasfasertechnologie ist es für Kunststofftechniker kein Problem, die erfindungsgemäßen FFC herzustellen und zu konfektionieren.

In der Beschreibung und den Ansprüchen wird von "Glasfasern" bzw. "Glasfaserbündeln" gesprochen, es ist selbstverständlich möglich, statt Glasfasern Kunststofffasern zu verwenden, wie sie verschiedentlich im Stand der Technik an Stelle von Glasfasern eingesetzt werden.

## Patentansprüche

1. Extrudiertes Flachkabel, sogenannter FFC (1) mit zumindest einer Leiterbahn (2), die von einem Extrudat (5) aus elektrisch iesolierendem Material umgeben ist, **dadurch gekennzeichnet, dass** zumindest ein Lichtleiter (3), der im wesentlichen Parallel zur Leiterbahn (2) im Extrudat (5) verläuft, vorgesehen ist.

2. FFC nach Anspruch 1, **dadurch gekennzeichnet, dass** der Lchtleiter (3) ein Glasfaserbündel, bestehend aus einzelnen Glasfasern (4) ist.

3. FFC nach Anspruch 2, **dadurch gekennzeichnet, dass** das Glasfaserbündel eine Querschnittsform aufweist, die im wesentlichen der einer Leiterbahn mit gleicher Querschnittsgröße entspricht.

4. FFC nach Anspruch 1, **dadurch gekennzeichnet, dass** der Lichtleiter aus mehreren Glasfaserteilbündeln mit zumindest angenähert kreisförmigem Querschnitt besteht, die so angeordnet sind, dass das Gesamtbündel eine Querschnittsform aufweist, die im wesentlichen der einer Leiterbahn mit gleicher Querschnittsgröße entspricht.

5. Verfahren zur Herstellung eines FFC (1) nach einem der Ansprüche 2 oder 3, **dadurch gekennzeichnet, dass** die Glasfasern (4) eines kreisförmigen oder nahezu kreisförmigen Glasfaserbündels durch mehrere formende Führungen (9, 10, 11, 12) gezogen werden, dass die erste Führung (9) auf der Eintrittseite der Glasfasern kreisförmigen Querschnitt aufweist und auf der Austrittseite einen annähernd quadratischen oder rechtekkigen Querschnitt, und dass die weitern Führungen (10, 11, 12) Querschnittsverläufe aufweisen, die eine immer fortschreitende Umformung des Glasfaserbündels (3) in eine schmalrechteckige Querschnittsform bewirken, und dass das so umgeformte Glasfaserbündel gemeinsam mit der/den Leiterbahn(en) (2) von Extrudat umhüllt wird.

6. Verfahren zur Herstellung eines FFC (1) nach Anspruch 5, **dadurch gekennzeichnet, dass** vor jeder Führung (9, 10, 11, 12) zumindest eine, gegebenenfalls profilierte, Führungsrolle (13) für das Glasfaserbündel (3) angeordnet ist.

7. Verfahren zur Herstellung eines FFC (1) nach Anspruch 4, **dadurch gekennzeichnet, dass** die einzelnen Glasfaserteilbündel durch zumindest eine Führung in eng benachbarte Position geführt werden und in ihrer Gesamtheit eine schmalrechteckige Querschnittsform aufweisen und dass das so gebildete Glasfaserbündel gemeinsam mit der/den Leiterbahn(en) (2) von Extrudat umhüllt wird.

8. Führung (9, 10, 11, 12) zur Umformung eines Glasfaserbündels nach Anspruch 5 oder 6, **dadurch gekennzeichnet, dass** die Größe des Querschnitts der Führungsfläche normal zur mittleren Bewegungsrichtung (Z) der Glasfasern zumindest im wesentlichen konstant bleibt.

9. Faltung eines FFC nach einem der Ansprüche 1 bis 4, **dadurch gekennzeichnet, dass** im Bereich der Faltung (6) der FFC (1) zwischen dem Lichtleiter (3) und der benachbarten Leiterbahn (2') durchtrennt wird und dass der den Lichtleiter (3) umfassende Teil (7) des FFC (1) nicht gefaltet wird sondern frei gekrümmt zwischen den geradlinig verlaufenden Bereichen des FFC (1) im Bereich außerhalb der Durchtrennung verläuft.
